(19) **Europäisches Patentamt**
**European Patent Office**
**Office européen des brevets**

(11) **EP 4 130 602 B1**

(12) **EUROPEAN PATENT SPECIFICATION**

(45) Date of publication and mention
of the grant of the patent:
**30.04.2025  Bulletin 2025/18**

(51) International Patent Classification (IPC):
**F24H 9/13** *(2022.01)*　　　**F28D 20/00** *(2006.01)*
**F24D 3/08** *(2006.01)*

(21) Application number: **22187934.9**

(22) Date of filing: **29.07.2022**

(52) Cooperative Patent Classification (CPC):
**F24D 3/082; F24H 9/133; F28D 20/00;**
**F28D 20/0039;** F24D 2220/08; F28D 2020/0069;
Y02E 60/14

(54) **A DIFFUSER FOR A WATER STORAGE TANK**

DIFFUSOR FÜR EINEN WASSERVORRATSTANK

DIFFUSEUR POUR UN RÉSERVOIR DE STOCKAGE D'EAU

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **02.08.2021  BE 202105611**

(43) Date of publication of application:
**08.02.2023  Bulletin 2023/06**

(73) Proprietor: **Daikin Europe N.V.**
**8400 Oostende (BE)**

(72) Inventors:
 • **RAMIREZ LASTRA, Monica**
  **8400 Oostende (BE)**
 • **AMEEL, Bernd**
  **8400 Oostende (BE)**

(74) Representative: **Brantsandpatents bv**
**Pauline Van Pottelsberghelaan 24**
**9051 Ghent (BE)**

(56) References cited:
**EP-A2- 0 928 940　　CN-U- 202 902 629**
**US-A- 4 394 966**

## Description

## TECHNICAL FIELD

The present invention relates to water storage tank accessories. In particular, the present invention relates to a diffuser for a hot water storage tank.

## BACKGROUND

Hot water tanks are broadly used in domestic applications as thermal and energy storage systems. To achieve high performance during the use of domestic hot water, and better energy and thermal storage capacity, it is necessary to have a highly stratified tank. Hot-water stratified storage tanks are widely known. They serve as far as possible to prevent mixing of hotter and colder water components when loading the storage tank. In this way, heat energy is maintained at the highest possible temperature and thus can be used efficiently.

In this context, stratification is understood as the occurrence and maintenance of adjacent, vertically distributed masses of water of different temperature and density. In a stratified tank, a cold layer of water is present at the bottom of the tank by virtue of its higher density. In the same stratified tank, a hot water layer is present at the top of the water column due to its lower density. These two water layers are separated by a medium temperature middle layer commonly referred to as thermocline.

As is typical of its function, a domestic water tank is subject to introduction and extraction of water. This water, either supplied or extracted, can range from cold to hot. It is particularly advantageous if warm water can be directly introduced within the warm water layer already present within the water tank. This permits, though not limited to, a faster availability of hot water. In a similar way, it is advantageous to introduce cold water within the cold water layer inside the water tank.

A common problem, in particular, during the introduction of water into a water tank is the formation of vortices where and when the water being introduced meets the stationary water inside said tank. These vortices negatively affect the stratification developed inside a water storage tank by promoting the mixing of the different water layers.

It is therefore an important aspect of the performance of a water storage tank that high flow rates into or out of the tank can be attained while mitigating, or preferably, eliminating stratification destroying vortices.

An attempt to address this problem can be found in US4394966. US '966 discloses a spraying apparatus having fluid storage tank, said tank having an inlet pipe equipped with a diffuser configured to control the fluid momentum in the fluid storage tank.

DE102004035026A discloses a vortex mitigation element for a water storage tank. Said element is a plate or plate like construction comprising a number of through holes on its surface through which water can flow. This element is presented placed close to the bottom or top of a water tank, such that a hollow is formed by said element and the domed bottom of said tank, wherein, a water inlet/outlet tube is placed. In another embodiment presented in the same document, a perforated box like construction is shown enveloping an inlet tube. In said construction, water flow into the tank is initially disrupted by said box like construction before being discharge in a substantially vertical direction into the water tank. A similar concept and embodiment thereof is presented in patent document WO2013083911. In this document, a box like construction is provided which comprises one or more inlet tubes mounted inside said construction. Said tubes are mounted adjacent an in substantial tangential alignment with the perimeter of the box, thereby promoting the circulation of inflowing water along said perimeter. Water is then allowed to exit the box in a substantially vertical direction, though one or more holes mounted on the top and/or bottom of said box.

The abovementioned concepts and embodiments present a disadvantage that should be obvious to those skilled in the art. Said advantage lies in the fact that water exiting any of the abovementioned box like constructions does so in a mostly vertical direction. Said direction, being substantially normal to the boundary area between water zones, has the most potential to create upward/downwards drafts, which will disturb the stratification inside the tank.

KR101055349 discloses a concept and multiple embodiments of a diffuser of plate like construction comprising a plate equipped with an approximately centered hole and a second plate mounted substantially parallel and in axial alignment with the first. The hole in the first plate is suitable to receive a water inlet tube, wherein the last section of said tube is oriented substantially perpendicular to the surfaces of both plates. By this concept, mitigation of stratification destroying vortices is attained partially by reducing the flow of water being provided to the tank. Further mitigation of said vortices is attained by the second plate, whereby the momentum of water flowing form the tube is mitigated. In this way, the vortices created by water exiting the end of the tube are mitigated before said water is discharged along the perimeter of the plates. A similar approach is disclosed in EP0928940. In EP '940 a water heater baffle comprising an inlet and an outlet for the passage of water there through, the baffle arrangement forces the water entering the baffle through a labyrinth before exiting the baffle in a direction substantially 90° to its general flow of entry into the baffle.

The aforementioned concept and embodiments thereof permit the exit of water out of the diffuser and into the tank in a substantially horizontal direction. However, and in order to sufficiently mitigate vortices before they exit said diffuser, a large volume inside the diffuser must be provided, resulting in a diffuser of large dimensions. these large dimensions preclude the installation of such a diffuser in smaller tanks, in particular where flow rates are desirable.

The present invention aims to resolve at least some of the problems and disadvantages mentioned above.

## SUMMARY

The present invention and embodiments thereof serve to provide a solution to one or more of the above-mentioned disadvantages. To this end, the present invention relates to a diffuser for a water tank according to claim 1.

It is an object of the present invention to make available a diffuser which permits, compared to similar diffusers in prior art, minimizing the disturbance to the stratification inside domestic hot water tanks during supply of water.

A more particular object of the invention is to make available a diffuser which, can introduce water as a thin layer adjacent to the top or bottom inner surface of the tank. Furthermore, a more particular object of the invention is to make available a diffuser which can be used in two different connection ways. In this way, water can be supplied to the tank with minimal to no disturbance to stratification inside a said water tank.

It is a particular object of the invention to make available a diffuser comprising a deflecting element suitable for the destruction or at least the mitigation of vortices created by water inflow. It is yet another object of the invention to make available a diffuser in which further includes a shrouding element surrounding said deflection element. In this way, any remaining vortices leaving the deflection element can be further mitigated before leaving the diffuser.

Preferred embodiments of the inventions are presented in claim 2 to claim 10. Here, two main embodiments of the invention are disclosed. A first embodiment wherein the diffuser is mounted to a pipe via an inlet on the top of said diffuser. A second embodiment wherein the diffuser is mounted to a pipe via an inlet on the bottom of said diffuser.

According to the invention, a diffuser is made available. Said diffuser comprising a deflecting element shrouded by a bowl. Said bowl and said deflection element, each being provided with a horizontally arranged inlet. The existence of two inlets permits advantageously, multiple manners by which the diffuser can be mounted to a pipe and inside the tank.

## BRIEF DESCRIPTION OF THE DRAWINGS

Figure 1 illustrates the diffuser, in particular, the bowl 2 and a detail of its inlet.

Figure 2 illustrates a section view of the diffuser.

Figure 3 illustrates an exploded view of the diffuser as configured to be coupled to a pipe via the bowl inlet.

Figure 4 illustrates an exploded view of the diffuser as configured to be coupled to a pipe via the cylindrical deflection element inlet.

Figure 5 illustrates section view of the diffuser coupled to a pipe via the bowl inlet.

Figure 6 illustrates section view of the diffuser coupled to a pipe via the cylindrical deflection element inlet.

Figure 7 illustrates a comparative view of the diameter of the flat on the bowl and the diameter of a virtual circle defined by the deflection element arms.

## DETAILED DESCRIPTION

The present invention concerns a diffuser (1) for water tanks as defined in claim 1 and a system of a water tank and such a diffuser as defined in claim 7.

In particular, the diffuser (1) and system of the present invention relate to domestic hot water tanks with a highly stratified water column.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:

"A", "an", and "the" as used herein refers to both singular and plural referents unless the context clearly dictates otherwise. By way of example, "a compartment" refers to one or more than one compartment.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

Whereas the terms "one or more" or "at least one", such as one or more or at least one member(s) of a group of members, is clear per se, by means of further exemplification, the term encompasses inter alia a reference to any one of said members, or to any two or more of said members, such as, e.g., any ≥3, ≥4, ≥5, ≥6 or ≥7 etc. of said members, and up to all said members.

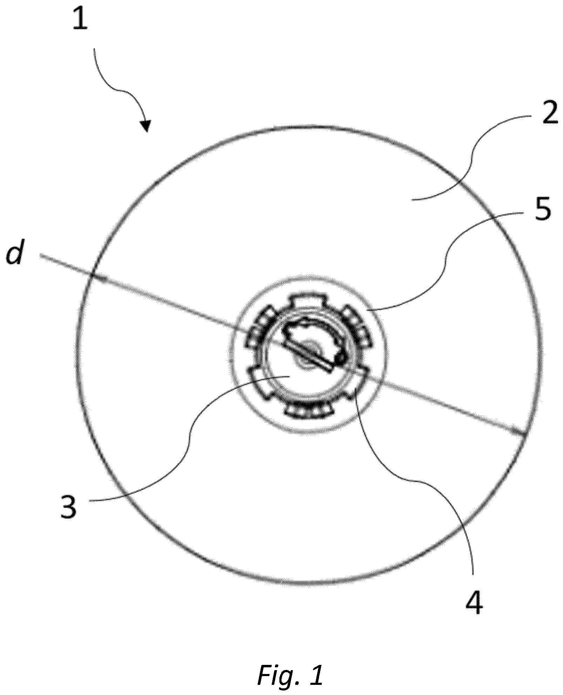

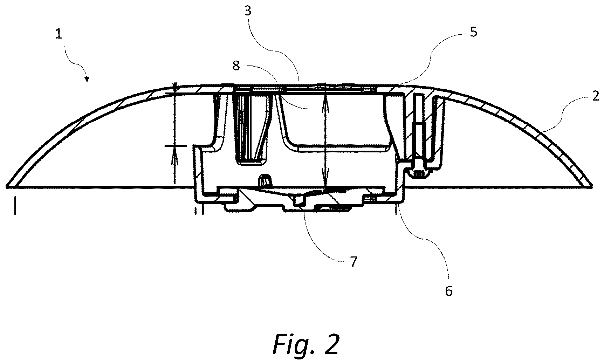

A first aspect of the invention relates to a diffuser (1) as illustrated in Fig. 1 to Fig. 7. Said diffuser (1) being configured to receive water having a velocity and for introducing said water near the bottom or the top of a water tank, said diffuser (1) comprising:

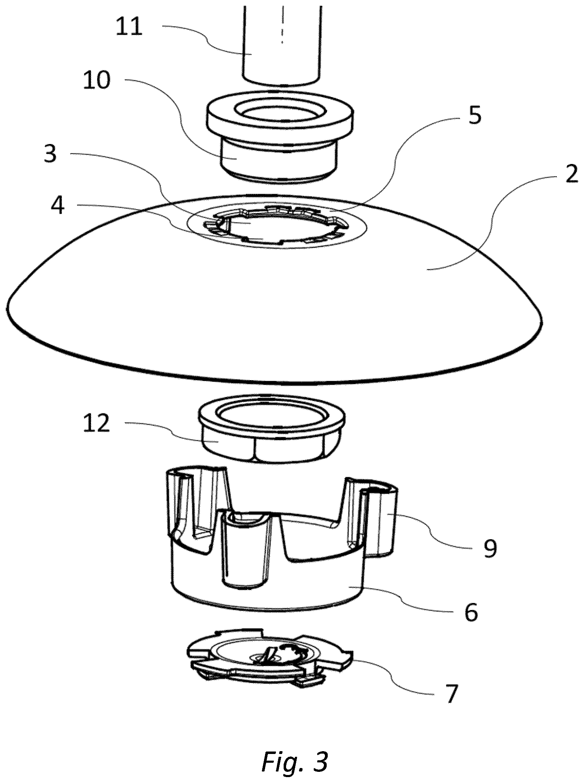

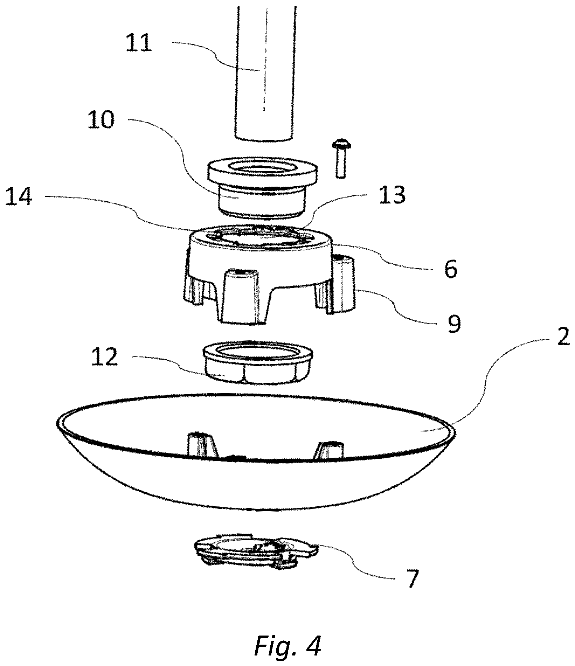

a bowl (2) with a first hole (3) in the center of the bowl;
a cylindrical deflection element (6) having a first end and a second end, said first end being further equipped with a plurality of vertically extending arms (9), and said second end being equipped with a second hole (13);
a circular lid (7) to be configured to be able to close either the first hole (3) or the second hole (13);
a cylindrical pipe (10) with a first and second end, said first end being configured to be attached to a pipe (11), and said second end being equipped with third hole;
characterized in that, the cylindrical deflection element (6) is, by means of the top surface of its vertically extending arms (9), concentrically attached to the inner surface of the bowl (2);
further characterized in that the cylindrical pipe (10) is attached to the first hole (3) of the bowl (2), the circular lid (7) is attached to the second hole (13) of the cylindrical deflection element (6), or,
the cylindrical pipe (10) is attached to the second hole (13) of the cylindrical deflection element (6), the circular lid (7) is attached to the first hole (3) of the bowl, the cylindrical pipe (10) has, furthermore, a radially extending lip at the first end as illustrated in Fig. 3 and Fig. 4. The radially extending lip is configured to engage with either the first hole (3) of the round shape or the second hole (13) of the cylindrical deflection element (6). In this way, the diffuser (1) can be mounted either bottom down or bottom up inside a water tank. A diffuser (1) according to claim 1, characterized in that, the diameter of the open side of the bowl (2) is less than half of the diameter of the tank where it is installed.

In the present context, "diffuser" is to be understood as a diffuser mounted and/or extending from a pipe section, and configured to reduce the speed of water admitted into said diffuser, with said water then being discharged from the said diffuser.

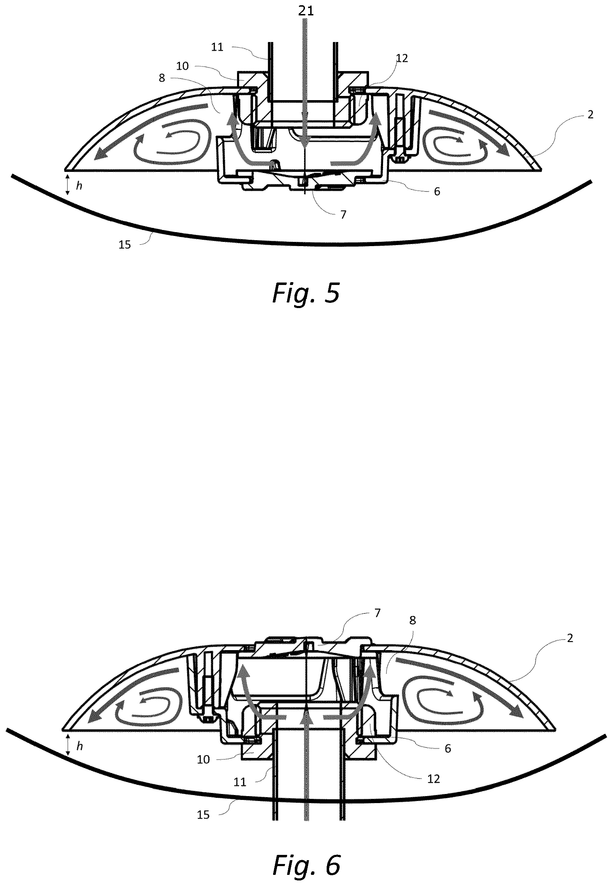

As illustrated in Fig. 5 and Fig. 6, the cylindrical deflection element (6) allows advantageously, a first diffusion stage of the water admitted into the diffuser (1), changing the direction of flow of said water from a substantially vertical direction into multiple directions radiating from the center of the diffuser (1). The association of said cylindrical deflection element (6) with a bowl (2) provide further advantages by enshrouding the water delivered out of said cylindrical deflection element (6). In particular, said bowl (2) permits shrouding vestigial vortices or other forms of turbulence formed at the outlets (8) of the cylindrical deflection element (6). More in particular, said shrouding effect isolates said vortices from the water already present inside the tank. In cases where said water inside said tank is already stratified, said shrouding effect reduces or even eliminates any disturbance that may destroy said stratification.

In this context, "turbulence" is defined as a fluid motion characterized by chaotic changes in pressure and flow velocity. Vortices are a major component of a turbulent flow. The terms "vortex" or "vortices" are defined as regions of a fluid in which the flow revolves around an axial line, which line can be either straight or curved. In this context, the terms "stratification" and "stratified" define, respectively, the action and state of separation of a water column into different layers having different temperatures. Each of said layers having a substantially uniform temperature.

Fig. 3 and Fig. 4, each illustrates an embodiment of the invention wherin the circular lid (7) is equipped with a radial lip and a plurality of radially extending lugs. Said lugs being vertically distanced from said lip, and said lugs being configured to fit the central round hole (3) of the bowl (2) or the central round hole (13) of the cylindrical deflection element (6). In this way, said lugs are configured to interact with the cutouts (4) and (14) in the central round holes of either the bowl (2) or the cylindrical deflection element (6), defining a bayonet mount. This permits, advantageously, fast and easy access to the interior of the diffuser (1), more particularly, to the cylindrical void between the deflection element (6) and the bowl (2). In this way, assembly of the diffuser (1) is made substantially easier, in particular, the manipulation of fasteners contained in the cylindrical void is made easier.

In this context, a "bayonet mount" or "bayonet interface" is defined as a type of mount comprising a cylindrical male element equipped with one or more radially extending elements and one or more female elements equipped with a hole of revolute geometry substantially similar to that of the male element. Said revolute geometry of the female element being interrupted by cutouts, such that the spaces between cutouts form abutments. Said cutouts being configured to accept the radially extending elements of the male element, and said abutments being configured to restrict the longitudinal motion of said radially extending elements.

Fig. 3 and Fig. 4 show two different, though not exclusive or limiting, embodiments of the invention, each embodiment representing a mode of attaching the diffuser (1) to a pipe (11). Fig. 3 shows an exploded view of a first preferred embodiment of the invention where the diffuser is configured to be assembled to a pipe (11) through the top inlet (3) of the bowl (2), and by intermediate of a cylindrical pipe (10). Said cylindrical pipe (10) being configured to rest against the flat (5) on the bowl (2). The same cylindrical pipe (10) is further configured to accept nut (12). The top surface of said nut (12), being configured to rest against the bottom surface of flat (5), provides the means, when combined with cylindrical pipe (10) to offer a rigid attachment of pipe (11) to bowl (2).

Fig. 4 illustrates another preferred embodiment of the diffuser (1). Fig. 4 shows an exploded view of another preferred embodiment of the invention where diffuser is configured to be assembled to a pipe (11) through the bottom hole (13) of the cylindrical deflection element (6), and by intermediate of a cylindrical pipe (10). Said cylindrical pipe (10) being configured to partially enter and extend past inlet (13). The same cylindrical pipe (10) is further configured to accept nut (12). The top surface of said nut (12), being configured to rest against the inside surface of the cylindrical deflection element (6), provides the means, when combined with cylindrical pipe (10) to offer a rigid attachment of pipe (11) to round cylindrical deflection element (6).

According to an embodiment of the present invention, the diameter of open side of the bowl (2) is less than half of the diameter of the tank where it is installed. In this way, water delivered out of the diffuser (1) is provided with sufficient distance to sufficiently slow down further, thereby reaching the inner walls of the tank at much lower speeds.

According to the invention, the bowl (2) is flat in the center and domed around the perimeter. In this way, the distance to be traversed by the water before leaving the diffuser (1) is substantially increased when compared to water leaving a diffuser (1) with a flat bowl.

According to a further or another embodiment of the invention, the curvature of the dome defines an angle at the edge of the diffuser (1), said angle being higher than 30 degrees with the horizontal plane. Said angle permits dispensing the water coming out of the diffuser (1) in a more advantageous direction. More preferably, said angle is combined by a smooth curvature of the bowl (2), thereby allowing the shrouding of vortices while avoiding further turbulence.

According to a further or another embodiment of the invention, the diameter of the cylindrical deflection element (6) is at least larger than the diameter of the pipe (11) segment to which it is attached.

According to a further or another embodiment of the invention, the height and diameter of the cylindrical deflection element (6) are sufficient to attach a pipe (11) segment and so that the total area of the radial outlets (8) of said cylindrical deflection element (6) is larger than the area of the first hole (3). Preferably, the height and diameter of the cylindrical deflection element (6) are sufficient so as to permit the assembly of a cylindrical pipe (10) without reducing the size of said radial outlets (8).

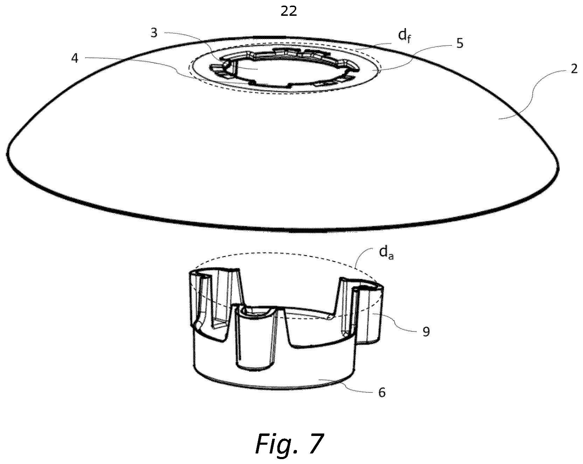

According to the invention shown in Fig. 7, the diameter $d_f$ of the flat (5) on the bowl (2) is identical to the diameter $d_a$ of a virtual circle of the cylindrical deflection element (6), which the virtual circle means a circle that is drawn so that all the plurality of vertically extending arms (9) come in contact with the inside of the circle. In this way, water leaving through the outlets (8) of the cylindrical deflection element (6) have a smoother transition towards the edge of the bowl (2), further reducing turbulence inside the diffuser (1).

According to a further or another embodiment of the invention, the diffuser (1) is installed in a substantially vertical orientation and close to the bottom (15) inner surface of the tank so that the diffuser (1) is facing the inner surface of said tank. According to a further or another embodiment of the invention, the diffuser (1) is installed in an upside-down substantially vertical orientation and close to the top inner surface of the tank so that the diffuser (1) is facing the inner surface of said tank. This permits, advantageously, the introduction of water into a tank is a substantially uniform manner around the diffuser (1). Furthermore, water is introduced into said tank as a gentle flow following the contour of the bottom (15) inner walls of the tank. This permits, advantageously, further deceleration of the water flowing out of the diffuser (1).

According to a further or another embodiment of the invention, the gap between the bowl (2) and the inner surface of the tank, the flow of water entering the diffuser (1) and the diameter of the bowl (2) of the diffuser (1) are related to each other by means of first constant ratio between c1 and a second constant ratio c2, the value of c1 being between 0.005 and 0.006, and the value of c2 being equal to 0.109, the gap (h) being further defined by the two equations:

$$\frac{Q^2 \cdot \rho}{d \cdot h \cdot \pi} = c_1$$

$$\frac{Q}{h \cdot d \cdot \pi \cdot \sqrt{g \cdot h}} = c_2$$

wherein, Q is the flow in cubic meters per second, h is the gap between the bowl (2) and the inner surface of the tank, $d$ is the diameter of the diffuser (1), $\pi$ is 3.14, g is the acceleration of gravity in meters per second per second, $\rho$ is the density of the fluid in Kilograms per cubic meter, $c_1$ and $c_2$ are a constant ratios. To provide an optimal rate of the jets to its buoyancy, the value of $c_1$ should be between 0.005 and 0.006. Preferably the value of $c_1$ is equal to 0.0057. The constant ratio $c_2$ should be between 0.05 and 0.3, most preferably, $c_2$ is equal to 0.109. In this way, optimal reduction of the velocity at the outlet of the diffuser (1) and optimal reduction of vortices can be attained for different water flows and tank dimensions.

According to a further or another embodiment of the invention, the cylindrical pipe (10) has a plurality of radially extending lugs, said lugs being on the same plane and equally distanced from the lip, and said lugs being closer to the second end of said cylindrical pipe (10) than said lip, and said lugs being configured to fit the central round hole of the bowl (2) or the central round hole of the cylindrical deflection element (6). In this way, the diffuser (1) can be more easily attached to a pipe and without the need for further fastening elements. This permits, advantageously, providing the diffuser (1) either as a kit or as a complete assembly. This permits also a faster attachment of the diffuser (1) to a pipe.

Another aspect of the invention relates to a method for introducing water into a water tank via a diffuser (1), said water having a velocity, said method comprising the steps of:

     letting water into a diffuser (1) by means of the proximal end of said diffuser (1), said proximal end configuring an inlet hole of said diffuser (1);

     passing water from said hole into a first void defined by the cylindrical deflection element (6) inside said diffuser (1), wherein said water changes flow direction before exiting said void through a plurality of radially arranged outlets (8) on said cylindrical deflection element (6);

     passing water from said outlets (8) and into a second void defined by the bowl (2) and the inner surface of the tank;

     passing water from said second void and into the tank through the gap formed by the perimeter of the diffuser (1) and the inner surface of the tank, said velocity having a lower speed than water admitted through any inlet of the diffuser (1).

Fig. 5 and Fig. 6 illustrate two possible but not limiting nor exclusive embodiments of the diffuser (1). Fig. 5 shows a preferred embodiment of the diffuser (1) mounted to a pipe (11) via an inlet on the top of the diffuser and in a position near the tank bottom (15). Fig. 5 shows how water flows into the diffuser via pipe (11), into the cylindrical deflection element (6) and inverting flow direction before leaving said cylindrical deflection element (6) through the cylindrical deflection element outlets (8). Water vortices leaving said outlets continue into a volume enshrouded by the bowl (2), said volume being further limited by the tank bottom (15). Water is then released through gap h devoid of vortices and having a reduced velocity. Fig. 6 shows yet another preferred embodiment of the diffuser (1) mounted to pipe (11) via an inlet on the bottom of the diffuser (1) and near the bottom of the tank (15). Fig. 6 shows how water flows into the diffuser via pipe (11), into the cylindrical deflection element (6) and changing flow direction before leaving said cylindrical deflection element (6) through the cylindrical deflection element outlets (8). Water vortices leaving said outlets continue into a volume enshrouded by the bowl (2), said volume being further limited by the tank bottom (15). Water is then released through gap h devoid of vortices and having a reduced velocity. Both Fig. 5 and Fig. 6 show examples where the diffuser is placed near the tank bottom (15), but if the diffuser is placed on the top of the tank, the condition of its placement can be indicated by inverting the top and bottom of Fig. 5 or Fig. 6.

List of numbered items

| | |
|---|---|
| 1 | diffuser |
| 2 | bowl |
| 3 | hole |
| 4 | cutout |
| 5 | flat |
| 6 | deflection element |
| 7 | lid |
| 8 | outlet |
| 9 | deflection element arms |
| 10 | cylindrical pipe |
| 11 | pipe |
| 12 | nut |
| 13 | second hole |
| 14 | deflection element cutouts |
| 15 | tank bottom |

**Claims**

1. A diffuser (1) configured to receive water having a velocity and for introducing said water near the bottom or the top of a water tank, said diffuser (1) comprising:

     a bowl (2) with a flat center (5) and domed around the perimeter, the bowl having a first hole (3) in the center of the bowl (2);

     a cylindrical deflection element (6) having a first end and a second end, said first end being further equipped with a plurality of extending arms (9), and said second end being equipped with a second hole (13);

     a circular lid (7) to be configured to be able to close either the first hole (2) or the second;

     a cylindrical pipe (10) with a first and second end, said first end being configured to be attached to a pipe (11), and said second end being equipped with third hole;

     wherein the cylindrical deflection element (6) is, by means of one end of its extending arms (9), concentrically attached to the inner surface of the bowl (2);

     further **characterized in that** the cylindrical pipe (10) is attached to the first hole (3) of the bowl (2), the circular lid (7) is attached to the second hole (13) of the cylindrical deflection element (6), or, the cylindrical pipe (10) is attached to the second hole (13) of the cylindrical deflection element (6), the circular lid (7) is attached to the first hole (3) of the bowl (2), the cylindrical pipe (10) has, furthermore, a radially extending lip at the first end, and, the radially extending lip is configured to engage with either the first hole (3) of the bowl (2) or the second hole (13) of the cylindrical deflection element (6), **characterized in that** the diameter of the flat (5) on the bowl (2) is identical to the diameter of a virtual circle of the cylindrical deflection element (6), wherein the virtual circle means a circle that is drawn so that all the plurality of extending arms (9) are inside of the circle.

2. A diffuser (1) according to claim 1, **characterized in that**, the circular lid (7) is equipped with a radial lip and a plurality of radially extending lugs, said lugs being distanced from said lip, and said lugs being configured to fit the first hole (3) of the bowl (2) or the second hole (13) of the cylindrical deflection element (6).

3. A diffuser (1) according to claim 2, **characterized in that**, the curvature of the dome defines an angle at the edge of the diffuser (1), said angle being higher than 30 degrees with the horizontal plane.

4. A diffuser (1) according to any of

   claim 1 to claim 3, **characterized in that**, the diameter of the cylindrical deflection element (6) is at least larger than the diameter of the pipe (11) to which it is attached.

5. A diffuser (1) according to any of claim 1 to claim 4,

   **characterized in that**, the height and diameter of the cylindrical deflection element (6) are sufficient to attach the pipe (11) and so that the total area of the outlets (8) of said cylindrical deflection element (6) is larger than the area of the first hole (3).

6. A diffuser (1) according to any of

   claim 1 to claim 5, **characterized in that** the cylindrical pipe (10) has a plurality of radially extending lugs, said lugs being on the same plane and equally distanced from the lip, and said lugs being closer to the second end of said cylindrical pipe (10) than said lip, and said lugs being configured to fit the first hole (3) of the bowl (2) or the second hole (13) of the cylindrical deflection element (6).

7. A water tank system comprising a tank and at least one diffuser (1) according to any claim 1-6, **characterized in that**, the diameter of the open side of the bowl (2) of the diffuser (1) is less than half of the diameter of the tank.

8. A system according to claim 7, **characterized in that**, the diffuser (1) is installed in a substantially vertical orientation and close to the bottom inner surface of a tank so that the open side of the bowl (2) is facing the inner surface of said tank.

9. A system according to claim 8, **characterized in that**, the diffuser (1) is installed in an upside-down substantially vertical orientation and close to the top inner surface of a tank so that the open side of the bowl (2) is facing the inner surface of said tank.

10. A system according to any of

    claim 7-9, **characterized in that**, the gap (h) between the bowl (2) and the inner surface of a tank, the flow (Q) of water entering the diffuser (1) and the diameter (d) of the bowl (2) of the diffuser (1) are related to each other by means of a first constant ratio c1 and a second constant ratio c2, the value of c1 being between 0.005 and 0.006, and the value of c2 being equal to 0.109, the gap (h) being further defined by the two equations:

$$\frac{Q^2 \cdot \rho}{d \cdot h \cdot \pi} = c_1 \quad ; \quad \frac{Q}{h \cdot d \cdot \pi \cdot \sqrt{g \cdot h}} = c_2$$

    wherein, Q is the flow in cubic meters per second, h is the gap between the bowl (2) and the inner surface of the tank, d is the diameter of the diffuser (1), $\pi$ is 3.14, g is the acceleration of gravity in meters per second per second, $\rho$ is the density of the fluid in Kilograms per cubic meter.

**Patentansprüche**

1. Diffuser (1), der dafür gestaltet ist, Wasser mit einer Geschwindigkeit aufzunehmen und dieses Wasser nahe dem Boden oder der Oberseite eines Wassertanks einzuführen, wobei der Diffuser (1) Folgendes umfasst:

   eine Wanne (2) mit einer ebenen Mitte (5), die am Umfang gewölbt ist, wobei die Wanne ein erstes Loch (3) in der Mitte der Wanne (2) aufweist,
   ein zylindrisches Umlenkelement (6) mit einem ersten Ende und einem zweiten Ende, wobei das erste Ende ferner mit mehreren sich erstreckenden Armen (9) versehen ist und das zweite Ende mit einem zweiten Loch (13) versehen ist,
   einen runden Deckel (7), der dafür zu gestalten ist, entweder das erste Loch (2) oder das zweite verschließen zu können,
   ein zylindrisches Rohr (10) mit einem ersten und einem zweiten Ende, wobei das erste Ende dafür gestaltet ist, an einem Rohr (11) angebracht zu sein, und das zweite Ende mit einem dritten Loch versehen ist,

wobei das zylindrische Umlenkelement (6) mittels eines Endes seiner sich erstreckenden Arme (9) konzentrisch an der Innenoberfläche der Wanne (2) angebracht ist,

ferner **dadurch gekennzeichnet, dass** das zylindrische Rohr (10) an dem ersten Loch (3) der Wanne (2) angebracht ist, der runde Deckel (7) an dem zweiten Loch (13) des zylindrischen Umlenkelements (6) angebracht ist oder

das zylindrische Rohr (10) an dem zweiten Loch (13) des zylindrischen Umlenkelements (6) angebracht ist, der runde Deckel (7) an dem ersten Loch (3) der Wanne (2) angebracht ist, das zylindrische Rohr (10) ferner eine sich radial erstreckende Lippe an dem ersten Ende aufweist und die sich radial erstreckende Lippe dafür gestaltet ist, mit entweder dem ersten Loch (3) der Wanne (2) oder dem zweiten Loch (13) des zylindrischen Umlenkelements (6) in Eingriff zu stehen, **dadurch gekennzeichnet, dass**

der Durchmesser der Ebene (5) an der Wanne (2) identisch mit dem Durchmesser eines gedachten Kreises des zylindrischen Umlenkelements (6) ist, wobei

der gedachte Kreis einen Kreis meint, der so gezogen ist, dass alle der mehreren sich erstreckenden Arme (9) innerhalb des Kreises liegen.

2. Diffuser (1) nach Anspruch 1, **dadurch gekennzeichnet, dass** der runde Deckel (7) mit einer radialen Lippe und mehreren sich radial erstreckenden Nasen versehen ist, wobei die Nasen von der Lippe beabstandet sind und die Nasen so gestaltet sind, dass sie in das erste Loch (3) der Wanne (2) oder in das zweite Loch (13) des zylindrischen Umlenkelements (6) passen.

3. Diffuser (1) nach Anspruch 2, **dadurch gekennzeichnet, dass** die Krümmung der Wölbung einen Winkel am Rand des Diffusers (1) bildet, wobei der Winkel mehr als 30 Grad zu der horizontalen Ebene beträgt.

4. Diffuser (1) nach einem von Anspruch 1 bis Anspruch 3, **dadurch gekennzeichnet, dass** der Durchmesser des zylindrischen Umlenkelements (6) mindestens größer als der Durchmesser des Rohrs (11) ist, an dem es angebracht ist.

5. Diffuser (1) nach einem von Anspruch 1 bis Anspruch 4, **dadurch gekennzeichnet, dass** die Höhe und der Durchmesser des zylindrischen Umlenke-

ments (6) ausreichen, um das Rohr (11) anzubringen und so dass die Gesamtfläche der Auslässe (8) des zylindrischen Umlenkelements (6) größer ist als die Fläche des ersten Lochs (3).

6. Diffuser (1) nach einem von Anspruch 1 bis Anspruch 5, **dadurch gekennzeichnet, dass** das zylindrische Rohr (10) mehrere sich radial erstreckende Nasen aufweist, wobei die Nasen auf der gleichen Ebene (10) und im gleichen Abstand von der Lippe liegen und die Nasen dem zweiten Ende des zylindrischen Rohrs (10) näher sind als die Lippe und die Nasen dafür gestaltet sind, in das erste Loch (3) der Wanne (2) oder das zweite Loch (13) des zylindrischen Umlenkelements (6) zu passen.

7. Wassertanksystem, einen Tank und mindestens einen Diffuser (1) nach einem der Ansprüche 1 bis 6 umfasst, **dadurch gekennzeichnet, dass** der Durchmesser der offenen Seite der Wanne (2) des Diffusers (1) kleiner ist als die Hälfte des Durchmessers des Tanks.

8. System nach Anspruch 7, **dadurch gekennzeichnet, dass** der Diffuser (1) in einer im Wesentlichen vertikalen Ausrichtung und nahe der Bodeninnenoberfläche eines Tanks installiert ist, so dass die offene Seite der Wanne (2) zu der Innenoberfläche des Tanks weist.

9. System nach Anspruch 8, **dadurch gekennzeichnet, dass** der Diffuser (1) kopfüber in einer im Wesentlichen vertikalen Ausrichtung und nahe der Innenoberfläche an der Oberseite eines Tanks installiert ist, so dass die offene Seite der Wanne (2) zu der Innenoberfläche des Tanks weist.

10. System nach einem der Ansprüche 7 bis 9, **dadurch gekennzeichnet, dass** der Zwischenraum (h) zwischen der Wanne (2) und der Innenoberfläche eines Tanks, der Durchfluss (Q) von in den Diffuser (1) eintretendem Wasser und der Durchmesser (d) der Wanne (2) des Diffusers (1) miteinander mittels eines ersten konstanten Verhältnisses c1 und eines zweiten konstanten Verhältnisses c2 in Beziehung gesetzt sind, wobei der Wert von c1 zwischen 0,005 und 0,006 beträgt und der Wert von c2 gleich 0,109 ist, wobei der Zwischenraum (h) ferner durch die beiden Gleichungen definiert ist:

$$\frac{Q^2 \cdot \rho}{d \cdot h \cdot \pi} = c_1 \;,\; \frac{Q}{h \cdot d \cdot \pi \cdot \sqrt{g \cdot h}} = c_2$$

, wobei Q der Durchfluss in Kubikmetern pro Sekunde ist, h der Zwischenraum zwischen der Wanne (2) und der Innenoberfläche des Tanks ist, d der Durchmesser des Diffusers (1) ist, $\pi$ 3,14 beträgt, g die Beschleunigung der Schwerkraft in Metern pro Quadratsekunde ist, $\rho$ die Dichte des Fluids in Kilogramm pro Kubikmeter ist.

**Revendications**

1. Diffuseur (1) configuré pour recevoir de l'eau ayant une vitesse et pour introduire ladite eau près du fond ou du sommet d'un réservoir d'eau, ledit diffuseur (1) comprenant :

   un bol (2) avec un centre plat (5) et bombé sur le périmètre, le bol ayant un premier trou (3) au centre du bol (2) ;
   un élément de déviation cylindrique (6) ayant une première extrémité et une seconde extrémité, ladite première extrémité étant en outre pourvue d'une pluralité de bras d'extension (9), et ladite seconde extrémité étant pourvue d'un deuxième trou (13) ;
   un couvercle circulaire (7) configuré pour pouvoir fermer soit le premier trou (2), soit le second ;
   un tuyau cylindrique (10) avec une première et une seconde extrémité, ladite première extrémité étant configurée pour être fixée à un tuyau (11), et ladite seconde extrémité étant pourvue d'un troisième trou ;
   dans lequel l'élément de déviation cylindrique (6) est fixé concentriquement à la surface intérieure du bol (2) au moyen d'une extrémité de ses bras d'extension (9) ;
   **caractérisé en outre par le fait que** le tuyau cylindrique (10) est fixé au premier trou (3) du bol (2), le couvercle circulaire (7) est fixé au deuxième trou (13) de l'élément de déviation cylindrique (6), ou,
   le tuyau cylindrique (10) est fixé au deuxième trou (13) de l'élément de déviation cylindrique (6), le couvercle circulaire (7) est fixé au premier trou (3) du bol (2), le tuyau cylindrique (10) a, en outre, une lèvre s'étendant radialement au niveau de la première extrémité, et la lèvre s'étendant radialement est configurée pour s'engager soit dans le premier trou (3) du bol (2) soit dans le deuxième trou (13) de l'élément de déviation cylindrique (6), **caractérisé en ce que** le diamètre du méplat (5) sur le bol (2) est identique au diamètre d'un cercle virtuel de l'élément de déviation cylindrique (6), dans lequel le cercle virtuel désigne un cercle qui est tracé de telle sorte que l'ensemble de la pluralité de bras d'extension (9) se trouve à l'intérieur du cercle.

2. Diffuseur (1) selon la revendication 1, **caractérisé en ce que** le couvercle circulaire (7) est pourvu d'une lèvre radiale et d'une pluralité d'ergots s'étendant radialement, lesdits ergots étant distants de ladite lèvre, et lesdits ergots étant configurés pour s'adapter au premier trou (3) du bol (2) ou au deuxième trou (13) de l'élément de déviation cylindrique (6).

3. Diffuseur (1) selon la revendication 2, **caractérisé en ce que** la courbure du dôme définit un angle au niveau du bord du diffuseur (1), ledit angle étant supérieur à 30 degrés par rapport au plan horizontal.

4. Diffuseur (1) selon l'une quelconque des revendications 1 à 3, **caractérisé en ce que** le diamètre de l'élément de déviation cylindrique (6) est au moins plus grand que le diamètre du tuyau (11) auquel il est fixé.

5. Diffuseur (1) selon l'une quelconque des revendications 1 à 4, **caractérisé en ce que** la hauteur et le diamètre de l'élément de déviation cylindrique (6) sont suffisants pour fixer le tuyau (11) et pour que la surface totale des sorties (8) dudit élément de déviation cylindrique (6) soit supérieure à la surface du premier trou (3).

6. Diffuseur (1) selon l'une des revendications 1 à 5, **caractérisé en ce que** le tuyau cylindrique (10) comporte une pluralité d'ergots s'étendant radialement, lesdits ergots étant sur le même plan et à égale distance de la lèvre, et lesdits ergots étant plus proches de la seconde extrémité dudit tuyau cylindrique (10) que ladite lèvre, et lesdits ergots étant configurés pour s'adapter au premier trou (3) du bol (2) ou au deuxième trou (13) de l'élément de déviation cylindrique (6).

7. Système de réservoir d'eau comprenant un réservoir et au moins un diffuseur (1) selon l'une quelconque des revendications 1 à 6, **caractérisé en ce que** le diamètre du côté ouvert du bol (2) du diffuseur (1) est inférieur à la moitié du diamètre du réservoir.

8. Système selon la revendication 7, **caractérisé en ce que** le diffuseur (1) est installé dans une orientation sensiblement verticale et à proximité de la surface intérieure inférieure d'un réservoir, de sorte que le côté ouvert du bol (2) fait face à la surface intérieure dudit réservoir.

9. Système selon la revendication 8, **caractérisé en ce que** le diffuseur (1) est installé dans une orientation inversée sensiblement verticale et à proximité de la surface intérieure supérieure d'un réservoir de sorte que le côté ouvert du bol (2) fait face à la surface intérieure dudit réservoir.

10. Système selon l'une quelconque des revendications 7 à 9, **caractérisé en ce que** l'espace (h) entre le bol (2) et la surface intérieure d'un réservoir, le débit (Q) d'eau entrant dans le diffuseur (1) et le diamètre (d) du bol (2) du diffuseur (1) sont liés entre eux au moyen d'un premier rapport constant c1 et un second rapport constant c2, la valeur de c1 étant comprise entre 0,005 et 0,006, et la valeur de c2 étant égale à 0,109, l'espace (h) étant en outre défini

$$\frac{Q^2 \cdot \rho}{d \cdot h \cdot \pi} = c_1$$

par les deux équations : ;

$$\frac{Q}{h \cdot d \cdot \pi \cdot \sqrt{g \cdot h}} = c_2$$

où Q est le débit en mètres cubes par seconde, h est l'espace entre le bol (2) et la surface intérieure du réservoir, d est le diamètre du diffuseur (1), $\pi$ vaut 3,14, g est l'accélération de la pesanteur en mètres par seconde par seconde, $\rho$ est la densité du fluide en kilogrammes par mètre cube.

*Fig. 1*

Fig. 2

Fig. 3

*Fig. 4*

Fig. 5

Fig. 6

*Fig. 7*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4394966 A
- DE 102004035026 A
- WO 2013083911 A
- KR 101055349
- EP 0928940 A